# EUROPÄISCHE PATENTSCHRIFT

(11) **EP 0 334 241 B1**
(45) Veröffentlichungstag und Bekanntmachung des Hinweises auf die Patenterteilung: **24.02.1993**
(21) Anmeldenummer: 89104853.0
(22) Anmeldetag: 17.03.1989
(51) Int. Cl.: F03D 3/06

(54) **Vorrichtung zur Nutzbarmachung von Windenergie**
Wind energy conversion plant
Installation de conversion d'énergie éolienne

(30) Priorität: 26.03.1988 DE 3810338
(43) Veröffentlichungstag der Anmeldung: 27.09.1989
(73) Patentinhaber: HEIDELBERG MOTOR GESELLSCHAFT FUER ENERGIEKONVERTER MBH, D-82319 Starnberg (DE)
(72) Erfinder: Heidelberg, Götz, Dipl.-Phys., D-8136 Starnberg-Percha (DE)
(74) Vertreter: Klunker . Schmitt-Nilson . Hirsch

(56) Entgegenhaltungen:
- EP-A- 0 030 357
- DE-A- 902 838
- DE-A- 2 829 716
- DE-A- 3 517 569
- US-A- 4 129 787
- US-A- 4 525 124

## Beschreibung

Die Erfindung bezieht sich auf eine Vorrichtung zur Nutzbarmachung von Windenergie, aufweisend:
(a) einen unter der Einwirkung von Wind um eine aufrechte Drehachse drehbaren Rotor, der mit mehreren, sich aufrecht erstreckenden Rotorblättern versehen ist; und
(b) eine Einrichtung zur Umwandlung von Bewegungsenergie des Rotors in elektrische Energie, welche Einrichtung - relativ zueinander drehbar und sich unter Freilassung eines Luftspalts gegenüberliegend - ein erstes Funktionsteil und ein zweites Funktionsteil aufweist, wobei eines der beiden Funktionsteile ein Erregersystem und das andere Funktionsteil ein Leitersystem aufweist.

Eine bekannte Vorrichtung dieser Art (EP-A-0 030 357) weist einen vertikalachsigen Savonius-Rotor auf. Die aufrechten, gekrümmten Flächen, welche die Windanströmung in Drehbewegung des Rotors umsetzen, sind zwischen einer oberen und einer unteren, horizontalen Endplatte des Rotors befestigt. Die untere Endplatte trägt an ihrem Außenumfang eine ringförmige Reihe von Erreger-Dauermagneten. Die Reihe der Dauermagnete ist konzentrisch von einer ringförmigen Reihe von Induktionsspulen umgeben, die auf einem den Rotor lagernden Betonsockel stationär angebracht sind.

Demgegenüber ist die erfindungsgemäße Vorrichtung dadurch gekennzeichnet,
(c) daß der auf einem Mast angeordnete Rotor eine Tragstruktur aufweist, die einen mit Trägern aufgebauten Zentralbereich sowie von dem Zentralbereich zu den von der Drehachse beabstandeten Rotorblättern führende Ausleger aufweist; und
(d) daß der Mast einen im wesentlichen horizontal angeordneten, ersten Tragring für das erste Funktionsteil aufweist und der Rotor einen an seinem Zentralbereich befestigten, im wesentlichen horizontal angeordneten zweiten Tragring für das zweite Funktionsteil aufweist;
(e) wobei der erste Tragring und der zweite Tragring Durchmesser haben, die größer als 12 % des Anordnungsdurchmessers der Rotorblätter, aber kleiner als dieser Anordnungsdurchmesser sind.

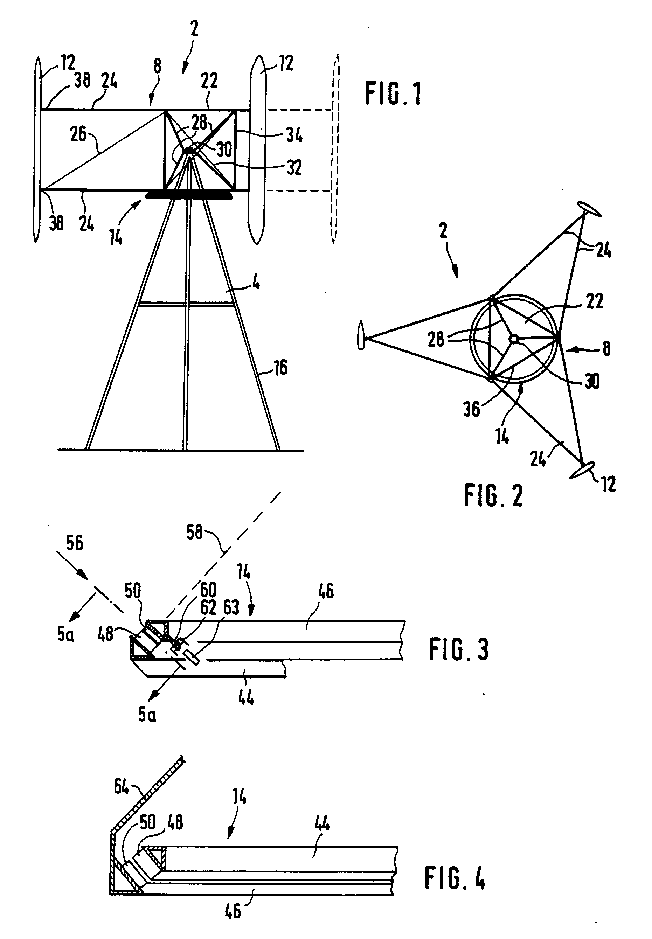

Aus dem Dokument US-A-4 129 787 ist eine Vorrichtung zur Nutzbarmachung von Windenergie mit einem vertikalachsigen Rotor, der mit aufrechten Rotorblättern versehen ist, und mit einer Einrichtung zur Umwandlung der Bewegungsenergie des Rotors in elektrische Energie bekannt. Es sind drei auf einem ersten, kleineren Anordnungsdurchmesser angeordnete Rotorblätter und drei auf einem zweiten, größeren Anordnungsdurchmesser angeordnete Rotorblätter vorgesehen. Der Rotor ist mittels eines ringförmigen Trägers, der auf Rollen läuft, drehbar gelagert. An dem Träger ist eine ringförmige Reihe von Erreger-Elektromagneten befestigt. Wie Sich aus Fig. 1 des Dokuments ergibt, hat der ringförmige Träger einen Durchmesser, der größer als 12 % der beiden Anordnungsdurchmesser der Rotorblätter, aber kleiner als diese Anordnungsdurchmesser ist.

Die erfindungsgemäße Vorrichtung läßt sich in einfacher Technik und daher mit geringen Kosten pro Einheit gewinnbarer, elektrischer Energie ausführen.

Die Erfindung verwirklicht die Grundkonzeption, vom Einbau eines Generators üblicher Bauweise und dem in der Regel vorgesehenen Getriebe abzugehen und stattdessen ein Erregersystem und ein Leitersystem Tragringen großen Durchmessers zuzuordnen, die in einfacher Weise an dem Mast und dem Rotor angeordnet werden können. Diese Einrichtung zur Umwandlung von Bewegungsenergie in Strom ist weniger in der Preiskategorie der elektrischen Maschinen angesiedelt, sondern mehr in der Preiskategorie des Stahlbaus. Dies kommt umso stärker zur Geltung, je größer die Leistung der Vorrichtung ist. Ein Getriebe ist entbehrlich, so daß dessen Kosten entfallen. Die sog. Wirkfläche zwischen den beiden Funktionsteilen, wegen des Luftspalts streng genommen eine Luftspaltschicht endlicher Dicke zwischen den einander zugewandten Flächen der beiden Funktionsteile, hat zu geringen Kosten eine erhebliche Größe, was für die Energieumwandlung bei getriebelosen Verhältnissen wichtig ist. Außerdem verträgt die Energieumwandlung mit Dauermagneterregung große Luftspalte, die im Bereich von Stahlbaustatt Maschinenbautoleranzen liegen, was die Kosten senkt.

In den Ansprüchen und der nachfolgenden Beschreibung wird an mehreren Stellen der Begriff "aufrecht" verwendet. Dies bedeutet einen Verlauf von unten nach oben, vorzugsweise einen vertikalen Verlauf, ohne auf die exakte Vertikalität beschränkt zu sein. Die beiden Tragringe sind als "im wesentlichen horizontal angeordnet" angegeben. Dies bedeutet eine Aussage über die generelle Lage der Tragringe und soll nicht bedeuten, daß diese sich insgesamt nur in einer horizontalen Ebene erstrecken sollen. So ist es zum Beispiel möglich, daß der am Mast vorgesehene, erste Tragring radial außen im wesentlichen die Gestalt eines vertikal verlaufenden Flansches mit von dort radial nach innen ragendem Erregersystem oder Leitersystem und mit im wesentlichen vertikalzylindrischer Wirkfläche hat. Ein weiteres Beispiel wird weiter unten im speziellen Beschreibungsteil gebracht. In den meisten Fällen und bevorzugt sind die Rotorblätter alle mit gleichem Abstand von der Drehachse des Rotors angeordnet, so daß sich ein gemeinsamer Umlaufkreis der Rotorblätter ergibt. Dies ist jedoch keine zwingende Bedingung, da man beispielsweise die Rotorblätter durchaus auf mehr oder weniger stark unterschiedlichen Durchmessern des Rotors anordnen kann. Rotoren mit einer verhältnismäßig kleinen Anzahl von Rotorblättern, insbesondere drei, vier, fünf oder sechs Rotorblättern, sind bevorzugt, ganz besonders die ungeraden Zahlen drei und fünf.

Die Einrichtung zur Umwandlung von Bewegungsenergie in elektrische Energie ist im Oberbegriff des Anspruchs 1 in denkbar allgemeinen Worten angegeben, um deutlich zu machen, daß grundsätzlich alle dem Fachmann zur Verfügung stehenden Arten der elektrischen/magnetischen Auslegung dieser Einrichtung in Betracht kommen. So kann das Erregersystem z.B. dauermagnetisch, elektromagnetisch, induktiv, oder auch magnetisch inaktiv mit ausgeprägten Polen (Reluktanzprinzip) sein. Für das Leitersystem des anderen Funktionsteils sieht man in der Regel Wicklungen oder Spulen aus Stromleiterdrähten oder ungewickelte Stromleiter vor. Es ist prinzipiell gleichgültig, ob das Funktionsteil mit dem Erregersystem umläuft und das andere Funktionsteil mit dem Leitersystem stationär ist oder umgekehrt. Bevorzugt ist es jedoch, das Funktionsteil mit dem Leitersystem stationär zu machen, da sich hierbei die Fortleitung des erzeugten Stroms mittels Kabel einfacher gestaltet.

Die Tragring-Durchmesser werden bezogen auf die Mitte der Wirkfläche gemessen. Diese Durchmesser sind größer als 12 %, vorzugsweise größer als 20 %, des Anordnungsdurchmessers der Rotorblätter.

In den Ansprüchen 3 bis 6 sind bevorzugte Merkmale der Umwandlungseinrichtung angegeben. Ein dauermagnetisches Erregersystem ist preisgünstig und verbraucht keinen Strom. Wenn der zweite Tragring, obwohl an dem normalerweise oberhalb des ersten Tragrings angeordneten Rotor vorgesehen, unterhalb des ersten Tragrings angeordnet ist, üben die magnetischen Anziehungskräfte zwischen den beiden Funktionsteilen, ganz besonders wenn ein Dauermagnetisches Erregersystem vorgesehen ist, eine nach oben gerichtete Kraft auf den Rotor aus. Auf diese Weise hebt die Magnetkraft das Gewicht des Rotors auf. Bei kleineren Vorrichtungen ist dieser Gesichtspunkt jedoch von geringerer Bedeutung. Außerdem gibt es Lagerungsbauarten für den Rotor, bei denen eine gewisse, nach unten gerichtete Vertikallast erwünscht ist. Hierzu gehören Pendelkegelrollenlager. Infolgedessen ist es alternativ ebenfalls bevorzugt, den zweiten Tragring oberhalb des ersten Tragrings anzuordnen.

Die bevorzugte Maßnahme gemäß Anspruch 7 führt dazu, daß sich die Spaltweite des Luftspalts zwischen den beiden Funktionsteilen im wesentlichen nicht ändert, wenn der am Rotor vorgesehene, zweite Tragring unter Rotorschrägstellung etwas auswandert. Diese Maßnahme gibt gute Voraussetzungen für die ganz besonders bevorzugte Möglichkeit, den Rotor an im wesentlichen nur einer Lagerungsstelle am Mast zu lagern.

Überhaupt ist darauf hinzuweisen, daß insbesondere der Einsatz eines dauermagnetischen Erregersystems zu einem Selbstzentrierungseffekt der Umwandlungseinrichtung und und damit des gesamten Rotors führt, weil bei einem Auswandern des Rotors unter leichter Schrägstellung seiner Drehachse die Magnetfelder zwischen dem Erregersystem und den gegenüberliegenden Polen des Leitersystems das Bestreben haben, die beiden Funktionsteile wieder in die ordnungsgemäße Relativlage zurückzuziehen.

Die erfindungsgemäße Vorrichtung läßt sich besonders aufwandsgünstig herstellen, wenn die Umwandlungseinrichtung so ausgelegt ist, daß sich im überwiegenden Arbeitsbereich ohne besondere Steuerungsmaßnahmen eine Frequenz des erzeugten Stroms ergibt, die mindestens im wesentlichen der Frequenz des Stromnetzes entspricht, in das eingespeist werden soll. Besonders häufige Stromnetzfrequenzen sind hierbei 50 oder 60 Hz. Es ist jedoch andererseits möglich, durch steuernde Eingriffe auf die Drehzahl des Rotors Einfluß zu nehmen, wie weiter unten noch genauer ausgeführt wird. Dies verbessert insbesondere die Nutzbarmachung der Windenergie in Richtung einer Verbreiterung des nutzbaren Windgeschwindigkeitsbereichs.

Vorzugsweise läßt sich die Spaltweite des Luftspalts der Umwandlungseinrichtung ändern bzw. einstellen, insbesondere durch Vertikalbeweglichkeit des ersten Tragrings relativ zu dem Mast und/oder durch Vertikalbeweglichkeit des zweiten Tragrings relativ zu dem Rotor und/oder durch Vertikalbeweglichkeit des gesamten Rotors relativ zu dem Mast. Mittels der Luftspalteinstellung läßt sich die im Leitersystem induzierte EMK in bestimmten Drehzahlbereichen auch bei veränderter Rotordrehzahl konstant halten oder läßt sich ein Beitrag zur Konstanthaltung der Rotordrehzahl bei sich innerhalb bestimmter Bereichsgrenzen ändernder Windgeschwindigleit leisten. Bei axial verlaufender Wirkfläche kann man deren axiale, wirksame Breite mittels derartiger Vertikalbeweglichkeit einstellbar machen.

Eine andere Möglichkeit zur Einflußnahme auf die Drehzahl des Rotors bzw. deren Konstanthaltung besteht darin, an dem ersten Tragring ein zusätzliches, strombeaufschlagbares Leitersystem vorzusehen, das mit dem Erregersystem zusammenwirkt. Diesem Leitersystem kann Strom zugeführt werden, um auf den Rotor, z.B. bei zu kleiner Drehgeschwindigkeit, ein zusätzliches Antriebsmoment auszuüben. Das zusätzliche Leitersystem kann besonders günstig mit einem Teil des Stroms gespeist werden, der im Stromerzeugungs-Leitersystem erzeugt wird.

Es ist konstruktiv besonders günstig und bevorzugt, den Rotor im wesentlichen nur an einer Lagerungsstelle an dem Mast zu lagern. Diese Lagerungsstelle liegt günstigerweise in einer Höhe des Rotors, die der Höhe der resultierenden, auf den Rotor wirkenden Windkraft im wesentlichen entspricht, damit die Lagerung möglichst von Kräften freigehalten ist, die die Drehachse des Rotors schrägstellen wollen. Die Lagerungsstelle befindet sich günstigerweise im Bereich der Mastspitze. Es ist günstig, die Lagerung des Rotors so auszubilden, daß sie kleine Schrägstellungen des Rotors zuläßt. Dies kann in besonders einfacher Weise durch Wälzlager, die eine derartige Beweglichkeit zulassen, beispielsweise Pendelrollenlager oder Pendelkegelrollenlager, bewerkstelligt werden. Auch sind gelenkartige Verbindungen zwischen dem eigentlichen Lager und dem Mast bzw. Rotor denkbar. Man kann anschlagartige, auch mit Rollen versehene und/oder dämpfende, Bauteile zur Begrenzung der Schrägstellungen des Rotors vorsehen, und zwar vorteilhafterweise im Bereich der Tragringe der Umwandlungseinrichtung. Zum Feststellen des Rotors bei übermäßig hoher Windgeschwindigkeit kann man eine auf den zweiten Tragring wirkende Bremse vorsehen.

Vorzugsweise sind das erste Funktionsteil und das zweite Funktionsteil, insbesondere in magnetischer Hinsicht, derart ausgelegt, daß eine Rückstellkraft, die Schrägstellungen des Rotors entgegenwirkt, erzeugt wird. Eine Verwirklichung dieses Aspekts ergibt sich bei dauermagnetischem Erregersystem und einer Wirkfläche, deren Normale im wesentlichen auf die Lagerungsstelle des Rotors gerichtet sind.

Der zweite Tragring ist vorzugsweise unten an dem Zentralbereich befestigt und kann einen Durchmesser haben, der in etwa gleich oder ein Stück größer oder auch ein Stück kleiner ist als der in Draufsicht betrachtehe Umkreis des Zentralbereichs. Der zweite Tragring kann mittragender Bestandteil des Rotors bzw. des Zentralbereichs sein. Man kann vorteilhaft pro Rotorblatt zwei oder drei Ausleger übereinander vorsehen, wiewohl auch eine Konstruktion mit nur einem Ausleger pro Rotorblatt möglich ist. Im Verein mit der "Einpunktlagerung" des Rotors in optimaler Höhenlage kann man eine Rotortragstruktur für die Rotorblätter verwirklichen, die im wesentlichen frei von Hauptmomenten der angreifenden Lasten ist.

Die im Oberbegriff des Anspruchs 1 angegebene Rotorbauweise eignet sich besonders gut dafür, auch auf die Nutzung hoher Windgeschwindigkeiten und auf das belastungsmäßige Standhalten gegenüber Wind von Sturmgeschwindigkeit ausgelegt zu werden. Außerdem ergibt diese Rotorbauweise günstige Voraussetzungen für die Konstruktion von Großanlagen zur Stromgewinnung aus Windenergie, insbesondere weil - im Gegensatz zur Bauweise mit radialen Rotorblättern, die sich um eine horizontale Achse drehen - keine kombinierte, in zwei Richtung angreifende Belastung aus Fliehkraft und Windkraft konzentriert an einer einzigen Stelle, der Rotorblattwurzel, angreift.

Der Mast und/oder der Rotor können nach den Gesichtpunkten des leichten Stahlbaus, also möglichst ohne biegebeanspruchte Träger konstruiert sein. Günstig ist die stahlbaumäßige Ausbildung der gesamten Vorrichtung einschließlich Umwandlungseinrichtung, weil hierbei die relativ groben Stahbaunormen und die relativ niedrigen Stahlbaupreise zugrundegelegt werden können.

Man kann eine Einrichtung zur Steuerung des Rotorblattanstellwinkels, gemessen relativ zur jeweiligen Tangente an den Bewegungskreis der Rotorblätter, vorsehen, insbesondere um einen Rotoranlauf aus dem Stand zu erreichen. Derartige Einrichtungen sind grundsätzlich bekannt.

Die Erfindung und Weiterbildungen der Erfindung werden im folgenden anhand eines Ausführungsbeispiels noch näher erläutert. Es zeigen:
- Fig. 1: eine Seitenansicht einer Vorrichtung zur Nutzbarmachung von Windenergie;
- Fig. 2: eine Draufsicht auf die Vorrichtung von Fig. 1;
- Fig. 3: die Umwandlungseinrichtung der Vorrichtung von Fig. 1 in größerem Maßstab;
- Fig. 4: eine Alternativform der Umwandlungseinrichtung in größerem Maßstab;
- Fig. 5: einen Teil der Umwandlungseinrichtung von Fig. 3 in Draufsicht gemäß Pfeilen 5a in Fig. 3 und in abgewickelter Radialansicht von außen gemäß Pfeil 5b von außen;
- Fig. 6: die Lagerungsstelle des Rotors der Vorrichtung von Fig. 1.
- Fig. 7: eine Seitenansicht einer Vorrichtung zur Nutzbarmachung von Windenergie in abgewandelter Konstruktion;
- Fig. 8: eine Detailansicht gemäß Pfeil VIII in Fig. 7.

Die in Fig. 1 und 2 gezeichnete Vorrichtung 2 zur Gewinnung von Strom aus Windenergie besteht im wesentlichen aus einem Mast 4, einem an der Mastspitze um eine vertikale Drehachse gelagerten Rotor 8, der radial außen und gleichmäßig auf einem Anordnungskreis verteilt drei Rotorblätter 12 mit senkrechter Längserstreckungsrichtung trägt, und einer Umwandlungseinrichtung 14 zur Umwandlung von Bewegungsenergie des Rotors 8 in elektrische Energie.

Der Mast 4 hat drei Beine 16, die unten breiter auseinanderstehen und oben zur Mastspitze zusammenlaufen. Der Mast 4 ruht mit Fundamenten auf dem Erdboden oder auf dem Meeresgrund bei geringer Wassertiefe.

Die Tragstruktur des Rotors 8 besteht im wesentlichen aus einem in Draufsicht dreieckigen Zentralbreich 22, sechs von dem Zentralbereich 22 radial nach außen führenden Auslegern 24 und Abspannseilen 26. Der Zentralbereich 22 weist drei senkrechte Träger 34 auf, die durch drei obere und drei untere, waagerechte Verbindungsträger 36 miteinander verbunden sind, sechs Träger 28, die von Eckpunkten des Zentralbereichs 22 zu einer zentralen Lagerungsstelle 30 führen, und Diagonalträger 32 auf. Die Ausleger 24 sind in Draufsicht dreieckig, wobei ihre Basis jeweils an zwei Eckpunkten des Zentralbereichs 22 befestigt ist. Zu jedem Rotorblatt 12 führen übereinander zwei waagerechte Ausleger 24, die einen Abstand voneinander entsprechend der Höhe des Zentralbereichs 22 haben. Von der unteren Anschlußstelle 38 zwischen dem jeweils unteren Ausleger 24 und dem jeweiligen Rotorblatt 12 führt ein Abspannseil 26 schräg nach innen und oben zu einem der oberen Verbindungsträger 36 des Zentralbereichs 22. Die Rotorblätter 12 sind jeweils an ihren beiden Anschlußstellen 38 mit den jeweils zwei zugeordneten Auslegern 24 über nicht gezeichnete Gelenke verbunden, so daß der Rotorblattanstellwinkel, gemessen in Draufsicht zwischen der Rotorblattsehne und der lokalen Tangente an den Anordnungskreis, variabel ist.

Bei der Ausführungsvariante gemäß Fig. 3 ist ein Stück unterhalb des Rotors 8 am Mast 4 ein im wesentlichen horizontaler, erster Tragring 44 befestigt. An der Unterseite des Zentralbereichs 22 ist ein horizontal angeordneter, zweiter Tragring 46 befestigt, der oberhalb des ersten Tragrings 44 liegt. Die Tragringe 44 und 46 haben einen Außendurchmesser, der etwas kleiner als der Umkreis des Zentralbereichs 22 ist.

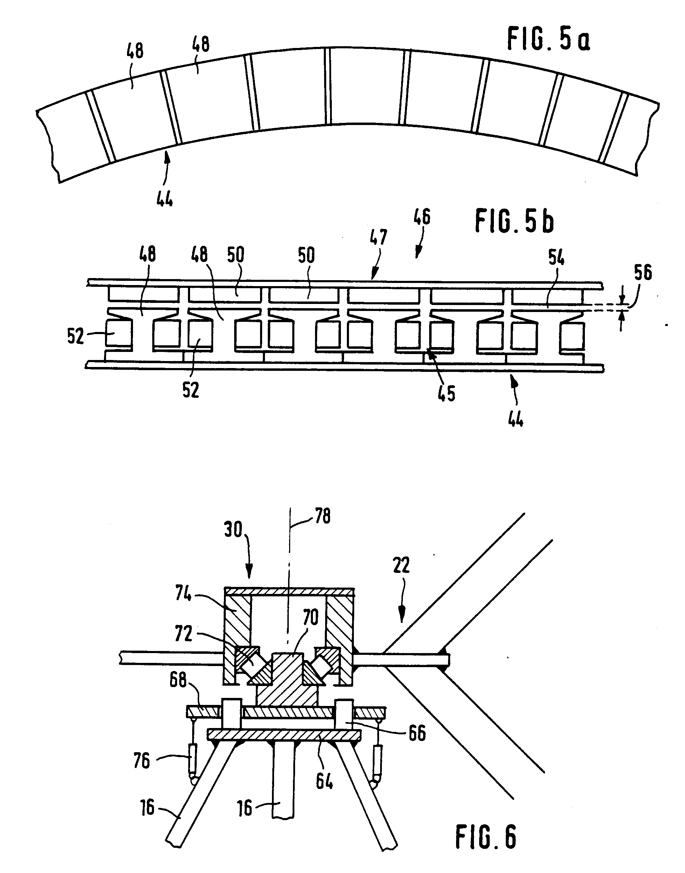

In Fig. 3 und 5 erkennt man, daß der erste Tragring 44 längs seines radial äußeren Randes auf der Oberseite mit einer Reihe von Elektromagnetpolen 48 besetzt ist, während der zweite Tragring 46 längs seines radial äußeren Randes auf der Unterseite mit einer Reihe von Dauermagneten 50 mit in Umfangsrichtung wechselnder Polung besetzt ist. Die Polteilungen der Elektromagnetpole 48 und der Dauermagnetpole 50 stimmen miteinander überein. Die Elektromagnetpole sind mit Wicklungen 52 elektrischer Leiter versehen. Zwischen den Elektromagnetpolen 48 und den Dauermagnetpolen 50 befindet sich ein Luftspalt 54 mit einer - senkrecht zu den Polflächen gemessen Weite 56. Auf diese Weise ist am ersten Tragring 44 ein erstes Funktionsteil 45 mit einem Leitersystem 52 gebildet und ist am zweiten Tragring 46 ein zweites Funktionsteil 47 mit einem Erregersystem 50 gebildet. Diese beiden Funktionsteile bilden die Umwandlungseinrichtung. Wenn der zweite Tragring 46 relativ zu dem stationären, ersten Tragring 44 um die Drehachse des Rotors gedreht wird, wird im Leitersystem 52 ein Wechselstrom induziert, dessen Frequenz von der Rotationsgeschindigkeit des Rotors 8 und von der Polteilung der beiden Funktionsteile abhängt.

Man erkennt in Fig. 3, daß sich die Luftspaltfläche 54 längs einer Kegelmantelfläche erstreckt. Geraden 58, die rechtwinklig zu den Polflächen der Elektromagnete 48 und der Dauermagnete 50 eingezeichnet sind, schneiden sich in der Drehachse des Rotors 8 in Höhe der Lagerungsstelle 30.

Ferner erkennt man in Fig. 3, daß der zweite Tragring 46 mit einem radial schräg nach innen ragenden Ringfortsatz 60 ausgestattet ist. Auf den Ringfortsatz 60 können Bremsklötze einer Bremseinrichtung 62 wirken. Bei stärkerer Schrägstellung des Rotors 8 kommt der innere Rand des Ringfortsatzes 60 in Kontakt mit Begrenzungsrollen 63.

Die Ausführungsvariante gemäß Fig. 4 unterscheidet sich von der Ausführungsvariante gemäß Fig. 3 dadurch, daß der zweite Tragring 46 mit nach oben weisenden Dauermagneten 50 unterhalb des ersten Tragrings mit nach unten weisenden Elektromagnetpolen 48 angeordnet ist. Die tragende Verbindung zwischen dem zweiten Tragring 46 und dem Rotor 8 erfolgt durch radial außen an dem erstem Tragring 44 vorbeiführende Träger 64. Die magnetischen Anziehungskräfte zwischen den Dauermagneten 50 und den Eisenteilen der Elektromagnetpole 48 üben insgesamt vertikal nach oben gerichtete Kräfte auf den zweiten Tragring 46 und damit auf den Rotor 8 aus, wodurch die Lagerung des Rotors 8 mindestens teilweise vom Rotorgewicht entlastet wird.

In Fig. 6 erkennt man, daß an der Spitze des Mastes 4 an den Beinen 16 eine waagerechte Abschlußplatte 64 angeschweißt ist, die am Umfang verteilt nach oben ragende Zapfen 66 trägt. Durch die Zapfen 66 ist eine waagerechte Lagerungsplatte 68 in Vertikalrichtung geführt. Ein zentraler, nach oben ragender Fortsatz 70 der Lagerungsplatte 68 trägt ein Pendelkegelrollenlager 72, das mit seinem Außenring in einem Lagerungszylinder 74 aufgenommen ist. Der Lagerungszylinder 74 ist Bestandteil des Zentralbereichs 22 des Rotors 8. Das Wälzlager 72 ist in einer derartigen Höhenlage im Rotor 8 angeordnet, daß die Resultierende aus den horizontalen Windlasten, die am Rotor 8 angreifen, durch die Lagerungsebene geht.

In Fig. 6 sind mehrere Hydraulikzylinder 76 eingezeichnnet, die jeweils mit ihrem unteren Ende an einem Bein 16 und mit ihrem oberen Ende an der Lagerungsplatte 68 angeschlossen sind. Mit den Hydraulikzylindern 76 kann die Lagerungsplatte 68 und damit der gesamte Rotor relativ zur Abschlußplatte 64 und damit relativ zum Mast 4 in Vertikalrichtung angehoben oder abgesenkt werden, wobei die Zapfen 66 als Führung dienen. Wenn der Rotor 8 auf diese Weise angehoben wird, vergrößert sich die Luftspaltweite 56 bei der Ausführungsvariante gemäß Fig. 3; bei der Ausführungsvariante gemäß Fig. 4 verringert sich die Luftspaltweite. Wenn der Rotor 8 abgesenkt wird, verringert sich die Luftspaltweite 56 bei der Ausführungsvariante gemäß Fig. 3 und vergrößert sich die Luftspaltweite 56 bei der Ausführungsvariante gemäß Fig. 4.

Bestimmte Wälzlagerbauarten, wie beispielsweise das Pendelkegelrollenlager 72 gemäß Fig. 6, lassen kleine Schrägstellungen der Drehachse des Rotors 8 gegenüber der Vertikalen zu. Die Umwandlungseinrichtung zur Umwandlung von Bewegungsenergie des Rotors in elektrische Energie mit Dauermagneten 50 übt jedoch eine Rückstellkraft aus, die den Rotor 8 in seine Sollage mit vertikaler Drehachse zurückzubringen trachtet, weil die in Fig. 3 und 4 gezeichnete Stellung diejenige mit den kürzesten magnetischen Flußlinien ist.

Die Lagerungsstelle 30 ist allenfalls etwas höher als der geometrischen Höhenmitte der Rotorblätter 12 entspricht, weil die Windgeschwindigkeit weiter oben meist etwas größer ist.

Am ersten Tragring 44 kann man ein weiteres, strombeaufschlagbares, nicht gezeichnetes Leitersystem vorsehen, um bedarfsweise ein Antriebsdrehmoment auf den Rotor 8 ausüben zu können. Beispielsweise kann man einzelne Paare von Elektromagnetpolen 48 mit Wicklungen eines derartigen, weiteren Leitersystems versehen statt der weiter vorn beschriebenen Wicklungen 52, in denen Strom induziert wird.

Der zweite Tragring 46 kann als mittragendes Bauteil des Rotors 8 gestaltet werden. So ist es beispielsweise möglich, die drei unteren, waagerechten Verbindungsträger 36 des Zentralbereichs 22 des Rotors 8 von Fig. 1 durch den mittragenden, zweiten Tragring 46 zu ersetzen.

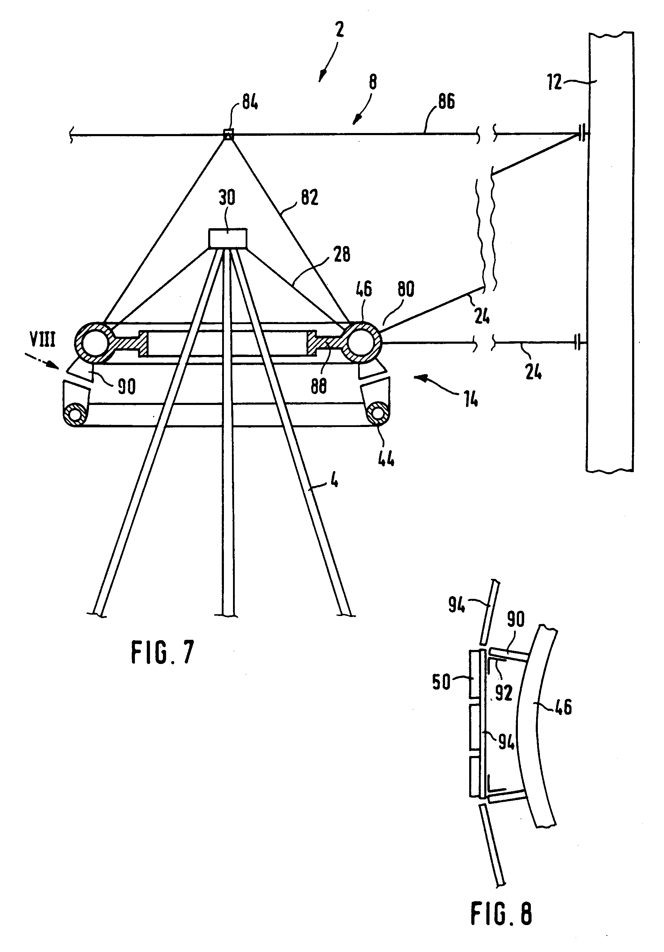

Eine alternative Konstruktion der Tragstruktur des Rotors 8 ist in Fig. 7 dargestellt. Sie besteht im wesentlichen aus dem unten angeordneten, zweiten Tragring 46, der an seinem Umfang verteilt drei Anschlußstellen 80 aufweist, drei Trägern 28, die von den Anschlußstellen 80 zur Lagerungsstelle 30 führen, drei Schrägträgern 82, die von den Anschlußstellen 80 zu einem zentralen Spitzen-Knotenpunkt 84 führen, insgesamt sechs Auslegern 24, die von den Anschlußstellen 80 zu den Rotorblättern 12 führen, und drei Radialstangen 86, die von dem Knotenpunkt 84 zu den Spitzen der der oberen Ausleger 24 führen. Im Vergleich zur Konstruktion gemäß Fig. 1 wird eine wesentlich geringere Anzahl von Trägern bzw. Stangen benötigt. Zu jedem Rotorblatt 12 führen zwei Ausleger 24, die in Draufsich dreieckig sind wie die Ausleger 24 in Fig. 1 und 2. Allerdings führen die jedem Rotorblatt 12 zugeordneten zwei Ausleger 24 radial innen im wesentlichen in die Höhenebene des zweiten Tragrings 46 zusammen. Der zweite Tragring 46 ist durch einen radial nach innen ragenden Kragen 88 versteift, da er das über die Ausleger 24 auf den zweiten Tragring 46 übertragene Drehmoment um die Rotorachse 78 aufgrund der angreifenden Windkraft aufnehmen muß.

In Fig. 7 und 8 erkennt man ferner eine besonders günstige Konstruktion der Befestigung der Bauteile des zweiten Funktionsteils 47 an dem zweiten Tragring 46. An dem zweiten Tragring 46 sind beabstandet radiale, sich in senkrechten Ebenen erstreckende Laschen 90 festgeschweißt. An diesen Laschen 90 sind mittels Winkeln 92 Tragplatten 94 festgeschraubt, die jeweils eine Anzahl von Dauermagneten 50, beispielsweise drei Dauermagnete 50 tragen. Die Tragplatten 94 können eben sein, so daß sich eine insgesamt polygonale Konfiguration des zweiten Funktionsteils 47 ergibt. Durch die genannten Schraubverbindungen zwischen der jeweiligen Tragplatte 94, dem jeweiligen Winkel 92 und der jeweiligen Lasche 90 ist eine Justierungsmöglichkeit bei der Montage der Dauermagnete 50 gegeben. Das erste Funktionsteil 45 kann in analoger Weise an dem ersten Tragring 44 befestigt sein. Für die Umwandlungseinrichtung sind hochkoerzitive Dauermagnete 50 bevorzugt. Hiermit aufgebaute Umwandlungseinrichtungen können mit relativ großer Luftspaltweite konstruiert werden, woraus die Möglichkeit relativ großer Toleranzen und der beschriebenen, polygonalen Konfiguration resultiert.

## Patentansprüche

1. Vorrichtung (2) zur Nutzbarmachung von Windenergie, aufweisend:
(a) einen unter der Einwirkung von Wind um eine aufrechte Drehachse (78) drehbaren Rotor (8), der mit mehreren, sich aufrecht erstreckenden Rotorblättern (12) versehen ist; und
(b) eine Einrichtung (14) zur Umwandlung von Bewegungsernergie des Rotors (8) in elektrische Energie, welche Einrichtung (14) - relativ zueinander drehbar und sich unter Freilassung eines Luftspalts (54) gegenüberliegend - ein erstes Funktionsteil (45) und ein zweites Funktionsteil aufweist, wobei eines der beiden Funktionsteile (45; 47) ein Erregersystem (50) und das andere Funktionsteil (45; 47) ein Leitersystem (52) aufweist,
dadurch gekennzeichnet,
(c) daß der auf einem Mast (4) angeordnete Rotor (8) eine Tragstruktur aufweist, die einen mit Trägern (28, 32, 34, 36; 28 82) aufgebauten Zentralbereich (22) sowie von dem Zentralbereich (22) zu den von der Drehachse (78) beabstandeten Rotorblättern (12) führende Ausleger (24) aufweist; und
(d) daß der Mast (4) einen im wesentlichen horizontal angeordneten, ersten Tragring (44) für das erste Funktionsteil (45) aufweist und der Rotor (8) einen an seinem Zentralbereich (22) befestigten, im wesentlichen horizontal angeordneten zweiten Tragring (46) für das zweite Funktionsteil (47) aufweist;
(e) wobei der erste Tragring (44) und der zweite Tragring (46) Durchmesser haben, die größer als 12% des Anordnungsdurchmessers der Rotorblätter (12), aber kleiner als dieser Anordnungsdurchmesser sind.

2. Vorrichtung nach Anspruch 1,
dadurch gekennzeichnet, daß der erste Tragring (44) und der zweite Tragring (46) Durchmesser haben, die größer als 20 % des Anordnungsdurchmessers der Rotorblätter (12) sind.

3. Vorrichtung nach Anspruch 1 oder 2,
dadurch gekennzeichnet, daß dasjenige Funktionsteil, welches das Erregersystem aufweist, mit ringförmig verteilten Dauermagneten (50) versehen ist.

4. Vorrichtung nach einem der Ansprüche 1 bis 3,
dadurch gekennzeichnet, daß das Erregersystem (50) dem zweiten Funktionsteil (47) zugeordnet ist.

5. Vorrichtung nach einem der Ansprüche 1 bis 4,
dadurch gekennzeichnet, daß der zweite Tragring (46) unterhalb des ersten Tragrings (44) angeordnet ist.

6. Vorrichtung nach einem der Ansprüche 1 bis 4,
dadurch gekennzeichnet, daß der zweite Tragring (46) oberhalb des ersten Tragrings (44) angeordnet ist.

7. Vorrichtung nach einem der Ansprüche 1 bis 6,
dadurch gekennzeichnet, daß Normale (58) auf der Luftspaltfläche (54) der Umwandlungseinrichtung (14) im wesentlichen auf eine Lagerungsstelle (30) des Rotors (8) gerichtet sind.

8. Vorrichtung nach einem der Ansprüche 1 bis 7,
gekennzeichnet durch eine Auslegung der Umwandlungseinrichtung (14) derart, daß sich in überwiegenden Arbeitsbereich eine Frequenz des erzeugten Stroms ergibt, die mindestens im wesentlichen der Frequenz des Stromnetzes entspricht, in das eingespeist werden soll.

9. Vorrichtung nach Anspruch 8,
dadurch gekennzeichnet, daß die Stromnetzfrequenz 50 oder 60 Hz ist.

10. Vorrichtung nach einem der Ansprüche 1 bis 9,
gekennzeichnet durch eine Einrichtung (76) zum Verändern der Spaltweite (56) des Luftspalts (54) der Umwandlungseinrichtung (14).

11. Vorrichtung nach einem der Ansprüche 1 bis 10,
dadurch gekennzeichnet, daß der erste Tragring (44) ein zusätzliches Leitersystem (62) aufweist, dem Strom von einer Stromquelle zuführbar ist.

12. Vorrichtung nach einem der Ansprüche 1 bis 11,
dadurch gekennzeichnet, daß der Rotor (8) an nur einer Lagerungsstelle (30) an dem Mast (4) gelagert ist.

13. Vorrichtung nach Anspruch 12,
dadurch gekennzeichnet, daß die Lagerungsstelle (30) in einer im wesentlichen der Höhenlage der Windkraftresultierenden entsprechenden Höhenlage des Rotors (8) vorgesehen ist.

14. Vorrichtung nach einem der Ansprüche 1 bis 13,
dadurch gekennzeichnet, daß die Lagerung des Rotors (8) so ausgebildet ist, daß sie kleine Schrägstellungen des Rotors (8) zuläßt.

15. Vorrichtung nach einem der Ansprüche 1 bis 14,
dadurch gekennzeichnet, daß das erste Funktionsteil (45) und das zweite Funktionsteil (47) derart ausgelegt sind, daß eine Schrägstellungen des Rotors (8) entgegenwirkende Rückstellkraft erzeugt wird.

16. Vorrichtung nach einem der Ansprüche 1 bis 15,
dadurch gekennzeichnet, daß jeweils übereinander mehrere Ausleger (24), vorzugsweise zwei Ausleger (24), vorgesehen sind.

17. Vorrichtung nach Anspruch 16,
dadurch gekennzeichnet, daß jeweils übereinander zwei innen im wesentlichen in einer Höhenebene zusammenlaufende Ausleger (24) vorhanden sind, die Drehmoment um die Rotordrehachse auf den Zentralbereich (22) übertragen.

18. Vorrichtung nach einem der Ansprüche 1 bis 17,
dadurch gekennzeichnet, daß der zweite Tragring (46) mittragender Bestandteil des Rotors (8) ist.

19. Vorrichtung nach einem der Ansprüche 1 bis 18,
dadurch gekennzeichnet, daß die Ausleger (24) von dem zweiten Tragring (46) ausgehen.

20. Vorrichtung nach einem der Ansprüche 1 bis 19,
gekennzeichnet durch eine Bremseinrichtung (62), die auf den zweiten Tragring (46) wirkt.

21. Vorrichtung nach einem der Ansprüche 1 bis 20,
gekennzeichnet durch Anlaufrollen (63) für den zweiten Tragring (46) zur Begrenzung von Schrägstellungsbewegungen des Rotors (8).

## Claims

1. An apparatus (2) for utilizing wind energy, comprising:
(a) a rotor (8) rotatable about an upright axis (78) of rotation under the effect of wind and provided with a plurality of upright rotor blades (12); and
(b) a means (14) for converting movement energy of the rotor (8) into electrical energy, said means (14) having a first functional part (45) and a second functional part - rotatable in relation to each other and located opposite each other with an air gap (54) left free therebetween -, one of said two functional parts (45; 47) having an exciter system (50) and the other functional part (45; 47) having a conductor system (52),
characterized in
(c) that the rotor (8) disposed on a mast (4) has a supporting structure comprising a central portion (22) composed with beams (28, 32, 34, 36; 28, 82), as well as extension arms (24) extending from the central portion (22) to the rotor blades (12) spaced from the axis (78) of rotation; and
(d) that the mast (4) comprises a substantially horizontally disposed first supporting ring (44) for the first functional part (45) and the rotor (8) has, attached to the central portion (22) thereof, a substantially horizontally disposed second supporting ring (46) for the second functional part (47);
(e) said first supporting ring (44) and said second supporting ring (46) having diameters which are greater than 12 % of the arrangement diameter of the rotor blades (12), but smaller than this arrangement diameter.

2. An apparatus according to claim 1,
characterized in that the first supporting ring (44) and the second supporting ring (46) have diameters which are greater than 20 % of the arrangement diameter of the rotor blades (12).

3. An apparatus according to claim 1 or 2,
characterized in that the functional part including the exciter system is provided with annularly distributed permanent magnets (50).

4. An apparatus according to any one of claims 1 to 3,
characterized in that the exciter system (50) is associated with the second functional part (47).

5. An apparatus according to any one of claims 1 to 4,
characterized in that the second supporting ring (46) is arranged below the first supporting ring (44).

6. An apparatus according to any one of claims 1 to 4,
characterized in that the second supporting ring (46) is arranged above the first supporting ring (44).

7. An apparatus according to any one of claims 1 to 6,
characterized in that normal lines (58) on the air gap area (54) of the conversion means (14) are directed substantially to a bearing location (30) of said rotor (8).

8. An apparatus according to any one of claims 1 to 7,
characterized by a design of the conversion means (14) such that, in the predominant range of operation, a frequency of the current produced results which at least substantially corresponds to the frequency of the electric network into which the current is to be fed.

9. An apparatus according to claim 8,
characterized in that said frequency of the electric network is 50 or 60 Hz.

10. An apparatus according to any one of claims 1 to 9,
characterized by a means (76) for changing the gap width (56) of the air gap (54) of said conversion means (14).

11. An apparatus according to any one of claims 1 to 10,
characterized in that the first supporting ring (44) comprises an additional conductor system (62) to which current can be supplied from a current source.

12. An apparatus according to any one of claims 1 to 11,
characterized in that the rotor (8) is supported on the mast (4) at only one bearing location (30).

13. An apparatus according to claim 12,
characterized in that the bearing location (30) is provided at a height position of the rotor (8) corresponding substantially to the height position of the wind power resultant force.

14. An apparatus according to any one of claims 1 to 13,
characterized in that the rotor (8) is supported such that small inclinations of the rotor (8) are possible.

15. An apparatus according to any one of claims 1 to 14,
characterized in that the first functional part (45) and the second functional part (47) are designed such that a resetting force is produced, counteracting inclinations of the rotor (8).

16. An apparatus according to any one of claims 1 to 15,
characterized in that several extension arms (24) each, preferably two extension arms (24) each, are provided above each other.

17. An apparatus according to claim 16,
characterized in that two extension arms (24) each are provided above each other, which converge inwardly substantially in a height plane and transfer torque about the axis of rotation of the rotor to the central portion (22).

18. An apparatus according to any one of claims 1 to 17,
characterized in that the second supporting ring (46) is a co-supporting component part of said rotor (8).

19. An apparatus according to any one of claims 1 to 18,
characterized in that the extension arms (24) extend from the second supporting ring (46).

20. An apparatus according to any one of claims 1 to 19,
characterized by a brake means (62) acting on the second supporting ring (46).

21. An apparatus according to any one of claims 1 to 20,
characterized by stopping rollers (63) for the second supporting ring (46) for limiting inclination movements of the rotor (8).

## Revendications

1. Dispositif (2) de conversion d'énergie éolienne, comportant :
(a) un rotor (8) pouvant tourner sous l'action du vent, autour d'un axe de rotation (78) vertical et pourvu de plusieurs pales de rotor (12) s'étendant verticalement; et
(b) un système (14) destiné à assurer la conversion de l'énergie cinétique du rotor (8) en énergie électrique, le système (14) présentant une première partie fonctionnelle (45) et une deuxième partie fonctionnelle - pouvant tourner l'une par rapport à l'autre, situées en face l'une de l'autre avec un entrefer (54) - l'une des deux parties fonctionnelles (45;47) présentant un système excitateur (50) et l'autre partie fonctionnelle (45;47) présentant un système conducteur (52),
caractérisé en ce que
(c) le rotor (8), disposé sur un mât (4), présente une structure porteuse, comportant une zone centrale (22), constituée de supports (28,32,34,36;28,82), ainsi que de bras (24) allant de la zone centrale (22) aux pales de rotor (12) espacées de l'axe de rotation (78); et
(d) le mât présente un premier anneau support (44), disposé sensiblement horizontalement, pour la première partie fonctionnelle (45) et le rotor présente un deuxième anneau support (46), fixé à sa zone centrale (22), sensiblement horizontal, pour la deuxième partie fonctionnelle (47);
(e) le premier anneau support (44) et le deuxième anneau support (46) ayant des diamètres supérieurs à 12 % du diamètre du système de pales de rotor (12), mais inférieurs à ce diamètre du système.

2. Dispositif selon la revendication 1, caractérisé en ce que le premier anneau support (44) et le deuxième anneau support (46) ont des diamètres supérieurs à 20 % du diamètre du système de pales de rotor (12).

3. Dispositif selon la revendication 1 ou 2, caractérisé en ce que la partie fonctionnelle qui présente le système excitateur est pourvue d'aimants permanents (50) distribués en anneaux.

4. Dispositif selon l'une des revendications 1 à 3, caractérisé en ce que le système excitateur (50) est associé à la deuxième partie fonctionnelle (47).

5. Dispositif selon l'une des revendications 1 à 4, caractérisé en ce que le deuxième anneau support (46) est disposé au-dessous du premier anneau support (44).

6. Dispositif selon l'une des revendications 1 à 4, caractérisé en ce que le deuxième anneau support (46) est disposé au-dessus du premier anneau support (44)

7. Dispositif selon l'une des revendications 1 à 6, caractérisé en ce que les normales (58) à la surface d'entrefer (54) du système de conversion (14) sont orientées sensiblement sur un point servant de palier de rotation (30) au rotor (8).

8. Dispositif selon l'une des revendications 1 à 7, caractérisé par une conception du système de conversion (14) telle que dans la plage principale de travail est produit un courant d'une fréquence correspondant au moins pratiquement à la fréquence du réseau électrique dans lequel il doit être injecté.

9. Dispositif selon la revendication 8, caractérisé en ce que la fréquence du réseau électrique est de 50 ou 60 Hz.

10. Dispositif selon l'une des revendications 1 à 9, caractérisé par un dispositif (76) destiné à modifier la valeur de la largeur (56) de l'entrefer (54) du système de conversion (14).

11. Dispositif selon l'une des revendications 1 à 10, caractérisé en ce que le premier anneau support (44) présente un système conducteur supplémentaire (62), auquel du courant électrique pouvant être amené depuis une source électrique.

12. Dispositif selon l'une des revendications 1 à 11, caractérisé en ce que le rotor (8) est monté rotation sur le mât (4) en un seul point de montage à rotation (30).

13. Dispositif selon la revendication 12, caractérisé en ce que le point de montage à rotation (30) est prévu dans une position en hauteur du rotor (8) correspondant sensiblement à la position en hauteur de la résultante des efforts dus au vent.

14. Dispositif selon l'une des revendications 1 à 13, caractérisé en ce que le montage à rotation du rotor est réalisé de telle façon qu'il admet de petites inclinaisons du rotor (8).

15. Dispositif selon l'une des revendications 1 à 14, caractérisé en ce que la première partie fonctionnelle (45) et la deuxième partie fonctionnelle (47) sont conçues de telle façon qu'est produit une force de rappel du vent agissant à l'encontre de l'inclinaison de la position du rotor (8).

16. Dispositif selon l'une des revendications 1 à 15, caractérisé en ce que sont prévus chaque fois plusieurs bras (24) superposés, de préférence deux bras (24).

17. Dispositif selon la revendication 16, caractérisé en ce que sont disposés chaque fois deux bras (24) s'étendant conjointement, sensiblement dans un même plan vertical, transmettant à la zone centrale (22) le couple de rotation autour de l'axe de rotation de rotor.

18. Dispositif selon l'une des revendications 1 à 17, caractérisé en ce que le deuxième anneau support (46) fait partie du rotor (8).

19. Dispositif selon l'une des revendications 1 à 18, caractérisé en ce que les bras (14) partent du deuxième anneau support (46).

20. Dispositif selon l'une des revendications 1 à 19, caractérisé par un dispositif de freinage (62), agissant sur le deuxième anneau support (46).

21. Dispositif selon l'une des revendications 1 à 21, caractérisé par des galets de roulement (63) pour le deuxième anneau support (46), en vue de limiter les mouvements d'inclinaison du rotor (8).
